# EUROPEAN PATENT APPLICATION

(11) **EP 3 159 382 A1**
(43) Date of publication of application: **26.04.2017**
(21) Application number: 15783503.4
(22) Date of filing: 21.04.2015
(51) Int. Cl.: C09D 11/00, C04B 41/00, B41M 1/34

(54) **AQUEOUS INK AND METHOD FOR USING SAME TO OBTAIN METALLIC OPTICAL EFFECTS ON CERAMIC SUBSTRATES**

(30) Priority: 22.04.2014 ES 201430597
(71) Applicant: Coloronda, S.L., 12200 Onda (Castellón) (ES)
(72) Inventor: GONZÁLEZ MORENO, Jorge, E-12200 Onda (Castellón) (ES)
(74) Representative: Martin Santos, Victoria Sofia
(86) International application number: PCT/ES2015/070329
(87) International publication number: WO 2015/162326

(57) **Abstract**

Ink having an aqueous nature and method for using the same to produce metallic optical effects on ceramic substrates, the composition of which includes a mixture of crystalline and/or vitreous solid components, also referred to as multi-components, characterised in that said components have a particle size smaller than 5 µm, which create metallic, polished, nacre and/or iridescent effects on the ceramic substrate; water as a medium for dispersing said solid components; and a mixture of additives capable of providing the inks, with physical and chemical properties that are adequate for ensuring the perfect suitability of the suspensions for facilitating the application thereof via inkjet digital printing systems. Said method includes the application of said compositions to ceramic tiles via the inkjet decoration technique, and the subsequent firing of the substrates thus obtained by means of single-firing thermal treatments.

## Description

### Object of the invention

The present invention, as indicated in the title, relates to inks and to the decorating of ceramic substrates, obtained by applying the inks by means of ink jet digital printing techniques, also called inkjet. Furthermore, the present invention also relates to the process used to obtain surface effects of a metallic nature, iridescent, pearlescent and/or polished on ceramic substrates obtained by mono-firing and by applying said ink.

The object of the present invention is the development of a metallic ink having an aqueous in nature, used in techniques of ink jet digital printing (also called inkjet), in the decoration of ceramic substrates which are subjected to a heat treatment step to high temperatures (800-1300°C), and that develops chromatic and metallic hues, glosses and/or iridescents on surfaces.

The scope of the present invention is of a particular application in the field of decorated ceramic tile manufacture, although it is equally applicable to any type of ceramic substrate susceptible to develop, after a heat treatment step, the desired end properties.

### Background of the invention

It is widely known the great scope of application offered by the ceramic tiles, so it is often necessary to provide the ceramic surfaces with certain distinguishing aesthetic properties, which together with the technical requirements, to meet, allow the development of multifunctional ceramic substrates.

Currently, there are many decoration systems used in the manufacture of wall and floor ceramic coverings which provide the ceramic surfaces of certain aesthetic properties: engraving, chalcography, serigraphy, flexography, gravure printing, inkjet printing, etc.; however, there are numerous features in the technology of digital ink jet printing techniques (also called inkjet) that make it especially interesting for producing decorated ceramic substrates.

In recent years, the process of decorating ceramics using inkjet systems, surfaces have become very important, not only to increase the aesthetic properties of the decorations, but also to provide other properties, which until now were impossible to obtain by means of other decoration techniques.

There are known advantages in the inkjet systems, such as the absence of contact between the spaying device and the surface to be decorated, thus preventing breakage and printing defects due to friction; the possibility of obtaining images with high resolution; the significant reduction in the number of steps to be performed during the decorating process; the obtaining of customized products at reasonable costs, since the changing of the image to be printed is obtained without performing any replacement of mechanical parts in the printing device; and the versatility of the technology by allowing the decor of pieces with any type of topography. The advantages above, make the ink jet (inkjet) digital printing into a suitable decoration method to increase added value to ceramic substrates; a key aspect in making traditional ceramic tiles.

It is widely known and commonly used in the ceramic industry, surface coatings that grant ceramic bases of certain aesthetic properties such as metallic, iridescent, gloss, pearlescent, etc.

Specifically, the development of new decorative effects based on systems formed by vitreous particles (frits and other vitreous structures), as well as complex systems consisting of two or more inorganic vitreous and/or crystalline structures (also known as multi-components), was restricted for the use in other systems for ceramic decoration, other than proposed system of the present invention (serigraphy, flexography, gravure, etc.).

Examples of prior art:
- Cabrera, M.J. et al., "Obtaining physical and optic effects for ceramic tile decoration". Original title: "Obtención de efectos físico-ópticos para la decoración de baldosas cerámicas". Bulletin of the Spanish Society of Ceramics and Glass. Vol. 50.2, March-April 2012.
- Spanish patent ES2360781 "Composition and process for obtaining materials for coating ceramic bodies, and the materials obtained thereof". Original title: "Composición y procedimiento para la obtención de materiales para el recubrimiento de cuerpos cerámicos y los artículos así obtenidos".
- Spanish patent ES2301364 "Formulation to produce metallic effects." Original title: "Formulación para producir efectos metálicos".
- Spanish patent ES2235650 "Modified ceramic formulations and method for the manufacture of ceramic pieces with metallic effects, and the ceramic pieces obtained thereof." Original title: "Formulaciones cerámicas modificadas y procedimiento para la fabricación de piezas cerámicas con efectos metálicos, así como las piezas cerámicas obtenidas".
- Rodrigo, J.L. et al., "Study of some of the variables influencing the gloss of glazes obtained from mixtures of tungsten oxide and frits". Original title: "Estudio de algunas de las variables que influyen sobre el brillo de vidriados obtenidos a partir de mezclas de frita y óxido de wolframio". In World Congress on Quality Tile and Ceramic Flooring (QUALICER) 2000.
- Escardino, A. et al., "Study in glass finishes gloss effect". Original title: "Estudio del efecto lustre en vidriados". In World Congress on Quality Tile and Ceramic Flooring (QUALICER) 2000.
- Spanish patent ES2161193 "Formulation and method for the production of metallic effects on ceramic tiles and its applications." Original title: "Formulación y procedimiento para la obtención de efectos metálicos en baldosas cerámicas y sus aplicaciones".

However, and according to the technological breakthroughs that involves incorporating inkjet printing systems in the production process itself, it is possible to achieve a significant consolidation not only in the production of ceramic products with high aesthetic properties, but also for the development of products able to meet high technical requirements (surface hardness, abrasion resistance, chemical resistance, improved anti-slip surfaces, preventing problems of weakness in the substrate, etc.).

The reason for the discrepancy reported in the above mentioned prior art, between the methods of conventional decoration and the method proposed herein, lies in the difficulty of reducing particle size of the vitreous and multi-component materials (about 5 µm), and the resulting colloidal stabilization, in order to reduce and/or eliminate flocculation and sedimentation processes of the particles, that would make the process suitable for use in digital systems.

In this sense, and according to patents ES2289916 (Colloidal dispersion of ceramic pigments), WO 2006/126189 (Pigmented inks suitable for use with ceramics and a method of producing the same), and WO 2006/077273 (Industrial decorative ink), it is described the composition inks for inkjet systems, constituted by crystalline structures (inorganic pigments, metal oxides, all of them being mono-components), in which the reduction of particle size involves the generation of surface charges which facilitate colloidal stabilization due to fixation of different moistening and dispersing additives to the surface; for the systems proposed in the present invention, it is necessary to carry out a deep study and analysis of the mechanisms of colloidal stabilization, as a result of differences in surface and specific weight found in the multi-component systems, as well as surface charge generation throughout the entire process of reducing particle size in aqueous systems.

These systems, unlike those made of organic vehicles, enable the generation of surface charges, contributing favourably to the ability of dispersion and suspension of particles of hydrophilic nature, which show different surface properties (ceramic pigments, metal oxides, glass components, ceramic frits, opening raw materials or additives to avoid excessive plasticity, etc.).

Also, the addition of water in the ink composition, allows the reduction of the environmental impact by reducing waste generation, as well as the use raw materials of low toxicity and carriers based on aqueous systems without solvents; these fact considerably differs the compositions proposed herein, from those employed so far in the technical field of application of the present invention.

One object of the present invention is to obtain a new generation of optical effects of metallic, iridescent, pearlescent and/or gloss nature, from the formulation and development of aqueous inks of particle size of less than 5 µm, that when applied by means of ink jet digital printing systems or inkjet, will allow the obtaining of these effects on ceramic bases for mono-firing.

Although, as described above, obtaining these effects is not a novelty in the ceramic industry, obtaining these effects through a relatively new inkjet technology is indeed novel, in which it is possible to use aqueous inks and, even more, if it is taken into account that for the development of these process it had been necessary to study and enhance the devitrification processes that take place during the step of the heat treatment of materials with a particle size of less than 5 µm.

Thus, the difficulty of obtaining ceramic effects from materials having particle sizes close to 1 µm is widely recognized. According to the research carried out in this field of study, knowing and predicting the effect of that variable on the mechanisms and processes of nucleation and crystallization of various raw materials during the sintering stages, becomes an essential task in favour of this invention.

In the specific case of ceramic glazes, the size and the granulometric distribution of the raw materials used in its elaboration, exerts great influence on the sintering process. In this way, as the particle size decreases and its granulometric distribution narrows, there is a reduction in the temperature at which the start of the sintering step occurs, as a result of the increase in capillary pressure (driving force of the process) originating inside the pores and at the points of contact between the particles.

According with all of the above said, and taking into account the surface nature of the inkjet application, it is necessary consider the high specific surface area of the small particles, as well as their refractoriness, in order to reduce and, at best of the cases, to avoid the chemical corrosion processes to which they are subjected as a consequence of the formation of the liquid phases during the stage of heat treatment of the ceramic bases and glazes; making it difficult to the generation of crystalline phases during the sintering step.

While it is true that at this moment an extensive number of patents and research papers can be found in which, by using inkjet decoration technology, it is possible to give the ceramic surfaces effects which are similar to those detailed in the present invention, all this prior technology relates to the formulation of inkjet inks using in their composition a mixture of components of organic nature, or in the case, a small proportion of water, far from that being used in this invention. In addition, in all of these cases the particle size is less than 1 µm, the working granulometry being below 5 µm.

Thus, patent WO 2014037597 (Metal ink composition for decorating non-porous substrates) describes the composition of an inkjet metallic ink for obtaining metallic effects on nonporous substrates. However, these effects have been obtained from the use of components of organic nature without using water in its composition.

In WO 03070663 (Method for producing ceramic tiles having a metallic finish and the tile produced thereof) the obtaining of metallic effects is possible through the deposition of surface layers on ceramic substrates by the generation of a plasma at elevated temperature; but in no case by means of the inkjet decorating system proposed in the present invention.

In addition, patents WO 2014/001315 (Method for obtaining optical interference effects by means of digital ink-jet technique) and EP2562144 (Procedure for obtaining a metallic effect on ceramic bases by ink injection) describe a method for preparing inkjet inks that confer optical and/or metallic effects on ceramic substrates. For this purpose, metal oxide particles smaller than 1 µm are used, although preferably nanometric, which are dispersed in a carrier of organic nature which could contain a small aqueous fraction in its composition. In spite of the similarities encountered with the present invention, the development of such surface effects is subject to the placement of a layer or "interface" prior to the application of the developed inks, for the effect to take place.

Finally, patent WO2013160506 (Digital enamel ink) discloses the method of preparing glazes compositions customarily employed by the ceramic industry for glazing, by means of ink jet printing (inkjet), on ceramic or metal bases. Nevertheless, and despite employing a considerable proportion of water in its compositions, in any case, it does not claims or expressly mentions the development of compositions capable of imparting metallic effects to the surfaces.

Regarding research papers and articles found, it is worth mentioning:
- Grupo Torrecid. "New digital inks for the production of innovative ceramic effects that generate new possibilities and future trends". Original title: "Nuevas tintas digitales para la obtención de innovadores efectos cerámicos con los que generar nuevas posibilidades y tendencias de futuro". Bulletin of the Spanish Society of Ceramics and Glass, March-April 2012.
- Ferro Spain, SA "Ink-Jet inks for 3D decoration". Bulletin of the Spanish Society of Ceramics and Glass. Vol. 50.2, March-April 2012.
- Ferro Spain, SA "Development of ceramic effects for use as surface finishes by digital technology injection." Original title: "Desarrollo de efectos cerámicos como acabados superficiales mediante tecnología de inyección digital". Bulletin of the Spanish Society of Ceramics and Glass. Vol. 50.2, March-April 2012.
- Ferro Spain, SA "Ink-Jet Inks for 3D decoration". Original titel: "Tintas Ink-Jet para decoración 3D". Bulletin of the Spanish Society of Ceramics and Glass. Vol. 50.2, March-April 2011.

In all the above cases, the surface effects developed by inkjet printing techniques, depend closely on the composition of the glaze on which they are applied, and hence on the interaction between the two. This fact greatly limits the chromatic variety of effects to be obtained, as well as the working conditions in which the effect is possible for development.

According to the foregoing, the object of the present invention is to present novel aqueous inks compositions, as well as the method used to obtain color shades on ceramic bases, which subjected to a high temperature thermal treatment process, make it possible to obtain exceptional aesthetic properties with advantages that go beyond the aforementioned state of the art. Some of these advantages are:
- The present invention does not involve a modification in the production systems, nor in the steps of heat treatment (firing) usually employed by the ceramic industry.
- There is no restriction on decoration since inkjet printing technology allows the coating on all or certain parts of the ceramic surfaces, with or without topography (relief), making it possible to produce a multitude of different models; this fact significantly contrasts with the decorations obtained using conventional decoration techniques.

- It is not necessary to carry out specific firing or thermal treatments at lower temperatures ("third fire") to obtain the effects broadly described in the following sections of the present specification.
- It does not present a limitation due to toxicity problems as it happened with the inkjet inks described in the prior art, for the new ink uses solvents and compounds of an organic nature in their composition.
- The present invention does not shows the limitations as to the chromatic variety of effects to be obtained due to the dependence with the enamel on which they are applied, as it happens in the prior investigations mentioned above (prior art).
- There is no need to arrange and place prior to the decoration of the ceramic bases, any layers, coatings and/or intermediate "interfaces" for the novel surface effect to become possible. In this way, it is not necessary to incur in additional production costs.
- The obtaining of such optical effects from the formulation and development of inkjet aqueous inks, object of the present invention, is not restricted to mono-component systems, as it was the case with the prior art, but it is possible the use of it in multi-component systems consisting of mixtures of vitreous particles and/or mixtures of crystalline particles.

All the effects obtained with the application of the present invention are possible as a consequence of the high temperature reaction of the crystalline and/or vitreous materials used therein. It will never be necessary to use precious metals in the compositions for the development of said effects for this would increase manufacturing costs.

### Description of the invention

The new generation of inks proposed in the present invention provide exceptional aesthetic properties to the ceramic substrates decorated by the application of these inks, by means of inkjet digital printing decoration techniques.

This new ink fits within the type of so-called "vitrifiable inks", named this way because they acquire their final properties when subjected to a stage of heat treatment at high temperatures.

The ink having an aqueous nature which is object of the present invention, contains water as a carrier or dispersion medium of the solid particles; a mixture of solid components of crystalline and/or vitreous nature; at least one preservative and/or bactericidal agent; at least one dispersing additive; at least one antifoam; at least one buffer for regulating the pH of the suspensions; at least one anti-sedimentation agent; at least one moistening agent for reducing surface tension; at least one additive to reduce the rate of evaporation of the suspensions; at least one rheological modifier; and may contain a colorant or pigment of an organic and/or inorganic nature.

All the components, which constitute the ink having an aqueous nature resulting from the present invention are necessary not only to develop ceramic substrates with metallic optical, iridescent, gloss and/or pearlescent optical effects, but also to provide a suitable performance of the same through inkjet printing systems.

The ink having an aqueous nature is prepared by mixing, dispersing and reducing particle size (also known as milling) of the solid components whose initial size is below 65 µm in the selected liquid medium, using high speed shears mills. For this purpose, it is necessary to use zirconium oxide balls, doped with yttrium oxide with a diameter between 1.0 and 2.3 mm, being preferably the sizes of 1.5 mm in diameter, as grinding elements.

During the grinding stage, it must be taken into account the following:
- The milling processes will allow not only breaking the existing particle agglomerates but also reducing their starting size by generating individual particles suspended in the liquid dispersing medium.
- The reduction of the size and shape of the particles will reduce the abrasive character of the crystalline structures through the nozzle system, as well as the obstruction thereof.
- The granulometric distribution and particle size of the inks developed after the grinding process are fundamental factors in the generation and development of superficial optical effects.

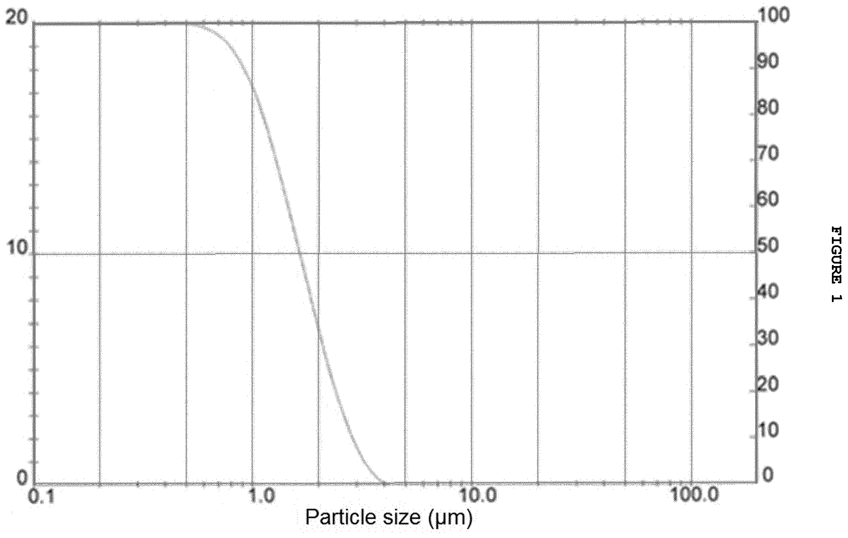

Said ink having a final aqueous nature (after the milling process) comprises:
a) A carrier formed by water, in a proportion between 40 and 80% by weight.
b) A mixture of solid components having a crystalline and/or vitreous nature, in a proportion between 10 and 50% by weight. The final particle size obtained after the milling process is less than 20 µm, although particle sizes smaller than 5 µm in diameter are particularly preferred in the present invention. (See Figure 1).
c) At least one preservative and/or bactericidal agent in a proportion between 0.05 and 1% by weight.
d) At least one additive or a mixture of dispersing additives, compatible with the carrier employed, in a proportion of 0.5 to 10% by weight.
e) At least one antifoam or a mixture thereof, compatible with the carrier employed, in a proportion between 0.05 and 5%.
f) At least one buffer or a mixture thereof, compatible with the carrier employed, in a proportion between 0.05 and 2% by weight.
g) At least one anti-sedimentation agent or a mixture thereof, compatible with the carrier employed, in a proportion comprised between 0.05 and 2% by weight.
h) At least one rheological modifier or a mixture thereof, in a proportion between 0.05 and 2% by weight.
i) At least one moistening and/or surface modifier agent or a mixture thereof, compatible with the carrier employed, in a proportion from 0.05 to 5% by weight.
j) At least one additive which reduces the rate of evaporation or a mixture thereof, in a proportion between 5 and 20% by weight.

In order to avoid the problems inherent in to the opening and closing of the printheads used in the decoration of ceramic pieces (as a result of the drying of the carrier used and/or the agglomeration or flocculation of the inorganic particles present in the ink), the aqueous carrier (a) used in the present invention should be accompanied by a mixture of additives which will make possible to arrange the stop of the devices during working shifts.

Thus, the preservative and or bactericidal agent (c) selected in the ink composition is characterized by preferably comprising any of the following functional groups: derivatives of isothiazolines, formaldehyde derivatives, mixtures of polyhydroxyalkanoates, and combinations thereof.

As dispersant additives (d) is selected one or a mixture of those having preferably the following functional groups: mixtures of phosphates and phosphonates, carboxylic acids derivatives, mixtures of silicates, derivatives carbonates, humates mixtures, modified fatty acid derivatives, mixtures of modified polyacrylates, acrylic copolymers, chelates, ester derivatives of phosphoric acids, and combinations thereof.

Moreover, as antifoams and/or foam removers (e), there have been selected for the composition those which especially contain mixtures of modified polysiloxanes.

As buffering agents (f) for regulating the pH of the suspensions, it is preferably selected for the present invention, those containing the following functionalities: mixtures of phosphates, citric acid, mixtures of carbonates, acetic acid, ammonia, and combinations thereof.

Preferably, mixtures consisting of: colloidal silica, clays, bentonites, modified alkali thickeners, peptapon, kaolin, thickeners and cellulosic derivatives, have been selected as anti-sedimentation (g) and rheological agents (h).

The ink, in addition to the compounds indicated above, includes components which help in moistening the solid particles and surfaces to be decorated (i), as well as additives which reduce the rate of evaporation (j) of the prepared suspensions.

Thus, generally, a mixture of polysiloxanes (i) joins the ink composition and improves moistening of the solid particles in the dispersion medium.

Meanwhile, as additives for regulating the rate of evaporation (j) the following compounds are especially selected but non-exclusive: glycerine, high molecular weight glycol derivatives and modified fatty acids.

As to the solid components (b) used in the composition of the aqueous based ink of the present invention, a wide range of compounds can be used whose function is to help the nucleation and crystallization processes, which take place during the step of the thermal treatment of the mentioned inks. In this way, it is possible to satisfactory obtain, surface chromatic effects (metallic, iridescent, pearlescent, and/or gloss).

The choice of different raw materials according to their vitreous and/or crystalline nature, as well as aspects such as their solubility in aqueous media, toxicity and cost, are thus required.

Among the vitreous solid components, object of the present invention, frits and their mixtures, comprising a mixture of metal oxides have been used. Besides this oxides, it has been regarded as necessary, among others, mixtures of Bismuth oxide, Tungsten oxide (Tungsten), Praseodymium oxide, Cerium oxide, Neodymium oxide, Erbium oxide, Iron oxide, Vanadium oxide, Oxide Antimony, Tin Oxide, Chromium Oxide, Copper Oxide and Nickel Oxide.

With respect to the rest of the oxides, the chemical composition of the frits used is completed, by those usually used in the elaboration of this type of vitreous structures, providing melting, thermal stability, flowability, maturation, colouring, viscosity and surface tension to the melt etc.

These include, but are not limited to the following: silicon oxide, aluminum oxide, zinc oxide, zirconium oxide, boron oxide, lithium oxide, sodium oxide, cobalt oxide, potassium oxide, Magnesium oxide, calcium oxide, strontium oxide, barium oxide, titanium oxide and phosphorus oxide.

According to the invention, all oxides constituting frits, may be introduced in different forms, being preferred carbonates, aluminates, metals, hydroxides, anhydrides and silicates.

Meanwhile, among the preferred crystalline raw materials that contribute to the solid part of the ink, are: quartz, alumina, petalite, spodumene, calcium carbonate, barium carbonate, sodium feldspar, potassium feldspar, dicalcium phosphate, ferric phosphate, magnetite, dolomite, cryolite, clay, kaolin, calcined kaolin, iron oxide, aluminum metaphosphate, wollastonite, iron phosphate, copper oxide; and mixtures thereof.

The function of these raw materials in the composition of the captioned inks, is to enhance and contribute to the formation of those crystalline phases responsible for the effects, object of the present invention, as well as to provide the necessary oxides and elements capable of regulating the properties of the melt during the heat treatment step.

It should be noted that for each ceramic base used (for example porous white coating, porous red paste coating, stoneware flooring, porcelain, tiles, sanitary ware, structural ceramics, artistic ceramics and glass), and for each glaze (for example finished gloss, satin and matte) it is necessary to adjust, in a particular way, each ink composition in order to obtain the desired optical effects.

After a process of mixing, homogenizing and reducing the particle size of the components selected from those detailed above, during a period of time ranging from 4 to 12 hours, the resulting ink is subjected to a filtration step at 20 µm to remove any particles of large size that could cause problems in the inkjet decoration systems and dives used.

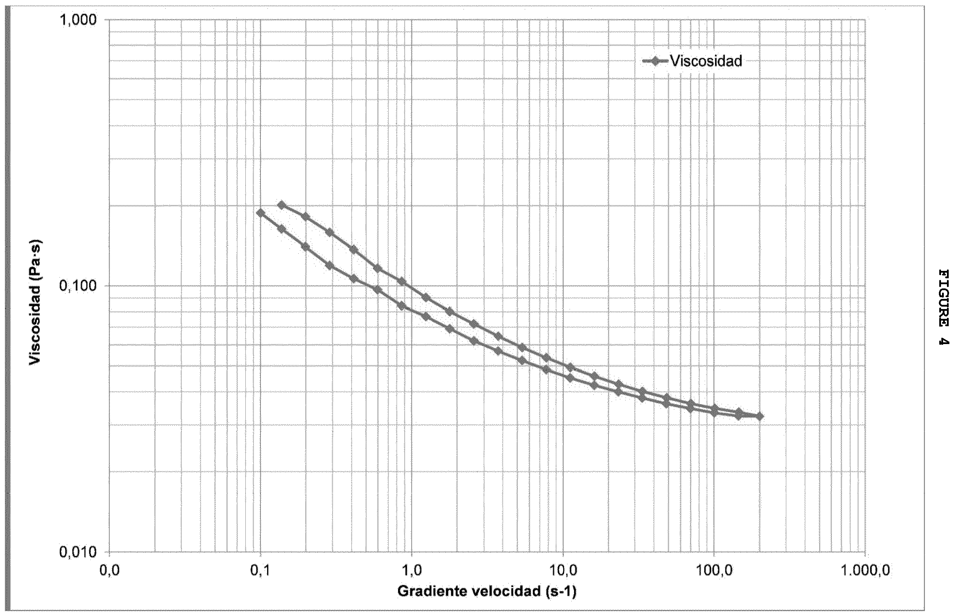

Thus, the most notable properties of the water-based ink develop in the present invention are:
- Density: 1.25-1.50 g/cm³ (at 25°C).
- Viscosity: 15-45 mPa*s (at 25°C y 15 s⁻¹).
- Pseudoplastic rheological behavior. (See Figure 4).
- Static surface tension: 30-65 mN/m (at 25°C).
- Particle size less than 20 µm, preferably between 1 and 5 µm.

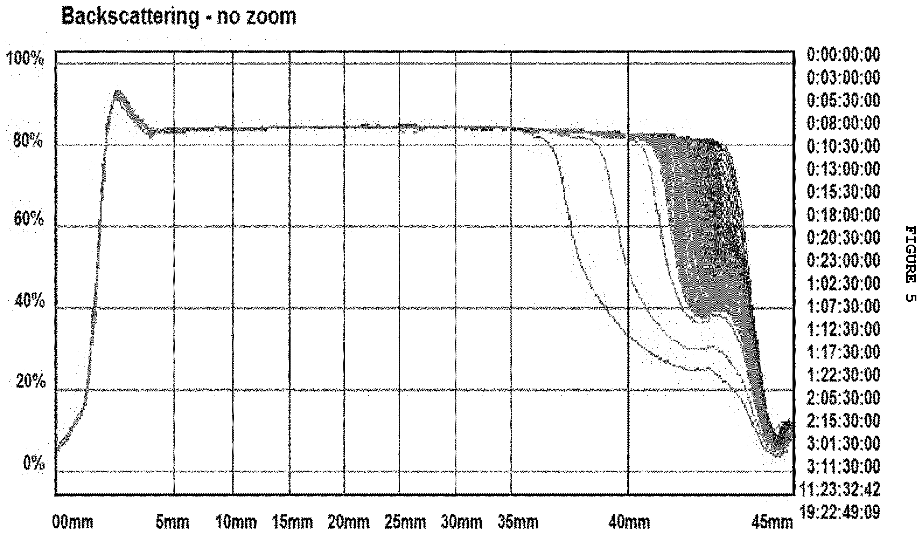

Also, the resulting ink has a colloidal stability suitable for use in the proposed decorating systems and devices, which can be analysed by physical methods of multiple light scattering. In this way it is possible to correlate the variation experienced over time with backscattering and light transmission through the ink samples, with the degree of dispersion and the colloidal stability of the developed suspensions (See Figure 5).

When applying the ink of the present invention through inkjet printing systems, it is possible to obtain personalized designs and motifs on ceramic pieces, which after a heat treatment process at high temperature, will show metallic, iridescent, pearlescent and/or gloss surface effects.

The decoration systems or devices used for applying the ink, are characterized by having one and/or several printheads based on a set of small nozzles, through which the ink (in the form of small drops) is pushed out to finally be placed on the surface of the substrate to be decorated.

At the same time, the firing step, will depend on the ceramic piece to be decorated, the working temperature being in any case between 500 and 1300°C (preferably between 600 and 1250°C). Also, it is not necessary to carry out any specific firing or specific adjustment of the temperatures and times for the heat treatment, which is usually used in the technical field of application of the present invention.

Finally, the products obtained with this invention, will confer metallic, iridescent, pearlescent and/or gloss aesthetic properties to the decorated ceramic bases, being able to combine these inkjet applications with others that allow the increase the added value to the decorations (textures, shades variations, colorations, etc.).

### Description of drawings

- Figure 1 shows a representative particle size distribution (cumulative volume) of the ink having an aqueous nature, object of the present invention.

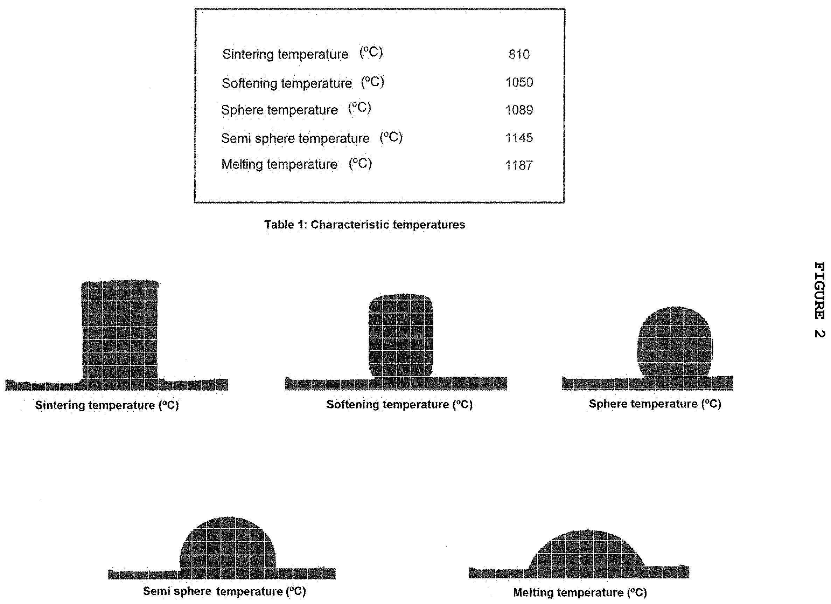

- Figure 2, on the other hand, shows the behavior on the firing temperature of a frit used in the formulation of an ink having an aqueous metallic nature with a golden finish, destined for the decoration of ceramic substrates of white porous coating.

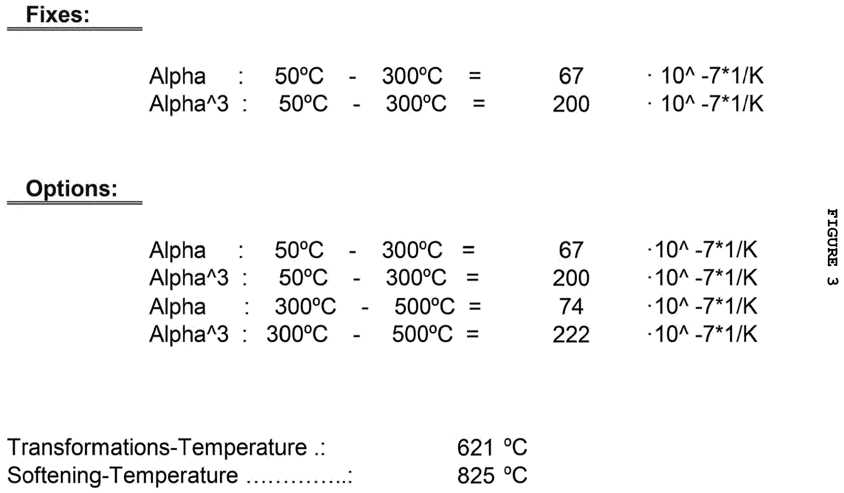

- Figure 3 shows the values corresponding to the dilatometric curve (expansion-contraction) characteristic of the vitreous component used in the composition of the ink having an aqueous nature, capable of conferring silver chromatic shades on stoneware substrates.
- Figure 4 details the rheological behavior of the ink having an aqueous nature which confers metallic effects to the porcelain ceramic substrates.
- Figure 5 shows the backscatter profiles of light from a sample of the ink having an aqueous iridescent nature, submitted for 19 days to an aging process at 30°C.

### Preferred embodiment of the invention

### Preferred embodiment 1:

300 grams of an ink having an aqueous nature were prepared by mixing, homogenizing and reducing the particle size for 1 hour, of the following components:

**Table 1**

| Component | Purpose | (%) by weight |
|---|---|---|
| Water | Dispersing means | 45 |
| 1,4- Butanediol | Reduce evaporation rate | 8 |
| Modified polysiloxane | Antifoam / Moistening | 0.4 |
| Formaldehyde | Preservative | 0.01 |
| Modified polysiloxane | Dispersant / Deflocculant | 7 |
| Bentonite | Suspension / Reological | 0.09 |
| Frits (CeO₂, CaO) | Enhance / Contribute crystallization | 35 |
| Tungsten metal (powder) | Tungsten Contribution | 4 |
| Petalite | Lithium contribution | 0.5 |

After filtering the ink obtained at 20 µm, a full characterization it was carried out, obtaining:
- Particle size: <5 µm.
- Density: 1.425 g/cm³ (at 25°C).
- Viscosity: approximately 50 mPa*s (at 25°C y 15 s⁻¹).
- Pseudoplastic rheological behavior.
- Static surface tension: 42 mN/m (at 25°C).

By means of inkjet printing, pieces of stoneware floor tiles having dimensions of 30x30cm² were decorated. They were then allowed to dry using an oven at 100°C, to be subsequently submitted to an industrial firing cycle at 1120°C.

The ceramic surfaces obtained in this way showed a bright appearance with iridescent and pearly hues.

### Preferred embodiment 2:

300 grams of the composition described in Table 2 were prepared by performing a homogenization and particle size reduction process using a high speed shear mill.

**Table 2**

| Component | Purpose | (%) by weight |
|---|---|---|
| Water | Dispersing means | 41 |
| Butyl Carbitol | Reduce evaporation rate | 12 |
| Modified polysiloxane | Antifoam / Moistening | 0.6 |
| Polyhydroxyalkanoates | Preservative | 0.1 |
| Phosphoric acid ester derivatives | Dispersant / Deflocculant | 5.5 |
| Citric acid / / Sodium citrate | Buffer | 0.1 |
| Peptapon | Suspension / Reological | 0.8 |
| Frit (PrO₂, ZrO₂, CeO₂) | Enhance / Contribute crystallization | 35 |
| Calcined kaolin | Oxide contribution | 4.9 |

After 2 hours of milling, the resulting ink was filtered at 20 µm, obtaining a suspension having the following physical properties:
- Particle size: <5 µm.
- Density: 1.35 g/cm³ (at 25°C).
- Viscosity: 22 mPa*s (at 25°C y 15 s⁻¹).
- Pseudoplastic rheological behavior.
- Surface tension: 38 mPa*s (at 25°C).

The bases for glazing white paste coating (30x30 cm²) obtained by inkjet application of the captioned ink, and its subsequent firing at 1120°C using an industrial thermal cycle, allowed to develop metallic effects of a golden nature on the decorated surfaces.

### Preferred embodiment 3:

The following raw materials were mixed together in the percentages (by weight) indicated in Table 3.

**Table 3**

| Component | Purpose | (%) by weigh |
|---|---|---|
| Water | Dispersing means | 44.3 |
| Modified fatty acid derivatives | Reduce evaporation rate | 5 |
| Modified polysiloxane | Antifoam / Moistening | 0.4 |
| Polyhydroxyalkanoates | Preservative | 0.05 |
| Phosphoric acid ester derivatives | Dispersant / Deflocculant | 0.5 |
| Citric acid / / Sodium citrate | Buffer | 0.05 |
| Peptapon | Suspension / Reological | 0.3 |
| Aluminum metaphosphate | Enhance / Contribute crystallization | 9.0 |
| Cryolite | Enhance / Contribute crystallization | 4.0 |
| Quartz | Enhance / Contribute crystallization | 6.0 |
| Sodium feldspar | Enhance / Contribute crystallization | 15.7 |
| Bicalcic phosphate | Enhance / Contribute crystallization | 6.8 |
| Iron oxide | Enhance / Contribute crystallization | 7.9 |

After 30 minutes of grinding, the resulting ink was filtered at 20µm, obtaining the following:
- Particle size: < 5 µm.
- Density: 1.40 g/cm³.
- Viscosity: 39 mPa*s (at 25°C y 15 s⁻¹).
- Pseudoplastic rheological behavior.
- Static surface tension: 45 mN/m (at 25°C).

By applying the ink as defined in the invention, on a ceramic base having a porcelain glaze, it develops a cupric metallic effect when submitted to the industrial firing cycles at a temperature of 1190°C.

## Claims

1. Ink having an aqueous nature Ink of an aqueous nature **characterized in that** it comprises at least:
• water, as a means of dispersing the solid particles, in a proportion between 40 and 80% by weight,
• a mixture of solid components in a proportion of between 10 and 50% by weight,
• at least one preservative and/or bactericidal agent in a proportion between 0.05 and 1% by weight,
• at least one dispersing additive in a proportion between 0.5 and 10% by weight,
• at least one antifoam and/or foam remover in a proportion between 0.05 and 5% by weight,
• at least one buffer suitable for adjusting the pH of the suspension in a proportion of 0.05 to 2% by weight,
• at least one anti-sedimentation agent, in a proportion comprised between 0.05 and 2% by weight.
• at least one moistening agent, suitable to reduce surface tension and to improve the wettability of the particles and the substrates, in a proportion between 0.05 and 5% by weight,
• at least one additive to regulate the rate of evaporation or of the suspension, in a proportion between 5 and 20% by weight.
• at least one rheological modifier, in a proportion between 0.05 and 2% by weight.
and having the following physical features:
• Density: 1.25-1.50 g/cm³, a 25°C.
• Viscosity: 15-45 mPa*s, at 25°C y 15 s⁻¹.
• Pseudoplastic rheological behavior.
• Static Surface Tension: 30-65 mN/m, at 25°C.
• Size of solid components less than or equal to 20 µπ.

2. Ink having an aqueous nature according to claim 1, **characterized in that** it comprises one or more dyes or pigments.

3. Ink having an aqueous nature according claim 1 or 2 **characterized in that in that** the size of the solid particles is equal to or less than 5 µm.

4. Ink having an aqueous nature according to any of the preceding claims, wherein the solid components comprise a mixture of metal oxides of at least two of the following compounds: bismuth oxide, tungsten oxide, praseodymium oxide, cerium oxide, neodymium oxide, erbium oxide, iron oxide, vanadium oxide, antimony oxide, tin oxide, chromium oxide, copper oxide and nickel oxide.

5. Ink having an aqueous nature according to claim 4, wherein the solid components comprise a mixture of metal oxides of at least two of the following compounds: silicon oxide, aluminum oxide, zinc oxide, zirconium oxide, boron oxide, lithium oxide, sodium oxide, cobalt oxide, potassium oxide, magnesium oxide, calcium oxide, strontium oxide, barium oxide, titanium oxide and phosphorus oxide.

6. Ink having an aqueous nature according to claim 4 or 5 wherein the solid components comprise at least one of the following compounds: quartz, alumina, petalite, spodumene, calcium carbonate, barium carbonate, sodium feldspar, potassium feldspar, dicalcium phosphate, ferric phosphate, magnetite, dolomite, cryolite, clay, kaolin, calcined kaolin, iron oxide, aluminum metaphosphate, wollastonite, iron phosphate, copper oxide.

7. Method of use for obtaining metallic optical effects on ceramic substrates of the ink of an aqueous nature according to the preceding claims, **characterized in that** it comprises the following steps
a) The application of the ink having an aqueous nature by means of inkjet printing technology on the ceramic bases.
b) Firing the pre-printed ceramic bases at temperature cycles between 600°C and 1250°C.

8. The method of use for obtaining metallic optical effects on ceramic substrates according to claim 7, wherein the ceramic base is porous white paste coating, red porous paste coating, porcelain coating or stoneware flooring.

9. The method of use for producing metal optical effects on ceramic substrates according to claim 7, wherein the ceramic base finish, is glossy, satiny or matte.

10. The method of use for producing metallic optical effects on ceramic substrates optical according to any one of claims 8 to 9, **characterized in that** the printing technology is serigraphy, flexography, gravure printing, airless application (airless), disc application, bell application, dry application, chalcography or other.
